# EUROPEAN PATENT APPLICATION

(11) **EP 4 468 660 A1**
(43) Date of publication of application: **27.11.2024**
(21) Application number: 23769674.5
(22) Date of filing: 10.03.2023
(51) Int. Cl.: H04L 12/00

(54) **PACKET PROCESSING METHOD AND APPARATUS, AND PACKET CHECKING METHOD AND APPARATUS**

(30) Priority: 18.03.2022 CN 202210276210
(71) Applicant: Huawei Technologies Co., Ltd., Shenzhen, Guangdong 518129 (CN)
(72) Inventor: DU, Kai, Shenzhen, Guangdong 518129 (CN); XU, Yan, Shenzhen, Guangdong 518129 (CN); HUANG, Jun, Shenzhen, Guangdong 518129 (CN); CHEN, Liang, Shenzhen, Guangdong 518129 (CN)
(74) Representative: Maiwald GmbH
(86) International application number: PCT/CN2023/080735
(87) International publication number: WO 2023/174170

(57) **Abstract**

This application discloses a packet processing method, a packet check method, and an apparatus. The packet processing method includes: A storage server receives a first packet, where the first packet includes a first service layer and a check value of the first service layer, and the first service layer includes payload data. The storage server obtains a check value of the payload data through calculation based on the first service layer and/or the check value of the first service layer. The storage server sends a second packet to a gateway device, where the second packet includes a second service layer, a check value of the second service layer, and the check value of the payload data, the second service layer is obtained based on the first service layer, and the check value of the second service layer is obtained through calculation based on the second service layer and the check value of the payload data. This application can reduce a calculation amount in a data packet check process of the gateway device, and enable the gateway device to have a check capability. One check process is added, and security in a data transmission process is improved.

## Description

This application claims priority to Chinese Patent Application No. 202210276210.8, filed with the China National Intellectual Property Administration on March 18, 2022 and entitled "PACKET PROCESSING METHOD, PACKET CHECK METHOD, AND APPARATUS", which is incorporated herein by reference in its entirety.

### TECHNICAL FIELD

This application relates to the field of communication technologies, and in particular, to a packet processing method, a packet check method, and an apparatus.

### BACKGROUND

With the development of internet technologies, application scenarios of data processing are increasingly diversified, a scale of to-be-processed data is increasingly large, and a requirement on a data storage system is increasingly high. Data storage is usually deployed on a general-purpose server or a dedicated storage array device (for ease of description, collectively referred to as a storage server in this application). However, conventional data storage on a single device cannot meet performance requirements. To meet big data application requirements, distributed cluster deployment is required, and a storage area network (Storage Area Network, SAN) is emerged.

In an existing large-scale data storage cluster solution (for example, an internet protocol storage area network IP SAN), a network device usually serves as a gateway device, and the gateway device forwards a data packet for communication between a user device and a storage server.

However, in a process of forwarding the data packet, the existing gateway device cannot check the data packet due to a limitation of calculation performance of the gateway device, or a delay is long due to a limitation of calculation performance even if check is performed. As a result, a calculated check value cannot be used.

### SUMMARY

Embodiments of this application provide a packet processing method, a packet check method, and an apparatus, to reduce a calculation amount in a data packet check process of a gateway device, and enable the gateway device to have a check capability. One check process is added, and security in a data transmission process is improved.

According to a first aspect, an embodiment of this application provides a packet processing method. The method includes: A storage server receives a first packet, where the first packet includes a first service layer and a check value of the first service layer, and the first service layer includes payload data. The storage server obtains a check value of the payload data through calculation based on the first service layer and/or the check value of the first service layer. The storage server sends a second packet to a gateway device, where the second packet includes a second service layer, a check value of the second service layer, and the check value of the payload data, the second service layer is obtained based on the first service layer, and the check value of the second service layer is obtained through calculation based on the second service layer and the check value of the payload data.

From a technical effect perspective, before sending the payload data, the storage server calculates the check value of the payload data, encapsulates the check value of the payload data and the payload data together into a packet, and sends the packet to the gateway device. Because the packet received by the gateway device includes the check value of the payload data, subsequently the gateway device can directly quickly update a check value of a service layer based on the check value of the payload data. Compared with the conventional technology, this application simplifies a calculation process of updating the check value of the service layer on the gateway device, and enables the gateway device to have a corresponding check capability. One check process is added in data transmission, and security of a data transmission process is improved.

In a feasible implementation, the first service layer further includes a first transmission control header, the second service layer includes a second transmission control header and the payload data, and the second transmission control header is generated based on session information to which the first transmission control header is linked.

In a feasible implementation, the check value of the second service layer is obtained by performing an exclusive OR operation on a check value of the second transmission control header and the check value of the payload data, and the check value of the second transmission control header is obtained by performing cyclic redundancy check (CRC) on the second transmission control header.

From the technical effect perspective, in this application, in a process of sending the data packet to the gateway device, the check value of the second service layer can be directly calculated based on the previously calculated check value of the payload data. Compared with the conventional technology in which cyclic redundancy check is performed on payload data to obtain a check value of the payload data, this application simplifies the calculation process, reduces a delay in the data transmission process, and improves data read performance.

In a feasible implementation, that the storage server obtains a check value of the payload data through calculation based on the first service layer and/or the check value of the first service layer includes: A processor in the storage server performs cyclic redundancy check (CRC) on the first transmission control header to obtain a check value of the first transmission control header, and performs an exclusive OR operation on the check value of the first transmission control header and the check value of the first service layer to obtain the check value of the payload data.

From the technical effect perspective, after receiving the first packet, the storage server obtains the check value of the payload data in advance through calculation by using the processor in the storage server, so that after receiving a data read request subsequently, the storage server can quickly obtain the check value of the second service layer through calculation based on the check value. This simplifies the calculation process, reduces the delay in the data transmission process, and improves the data read performance.

In a feasible implementation, the method further includes: The storage server writes the payload data and the check value of the payload data into a memory in the storage server; and after the storage server receives a data read request, reads the payload data and the check value of the payload data from the memory, and checks the payload data based on the check value of the payload data.

From the technical effect perspective, after obtaining the check value of the payload data through calculation, the processor stores the check value of the payload data in the memory, so that after receiving the data read request subsequently, the storage server can directly read the check value of the payload data from the memory, and quickly obtains the check value of the second service layer through calculation based on the check value. This simplifies the calculation process, reduces the delay in the data transmission process, and improves the data read performance.

In a feasible implementation, the second transmission control header includes a first identifier; and that the storage server obtains a check value of the payload data through calculation based on the first service layer and/or the check value of the first service layer includes: After identifying the first identifier, a network interface card in the storage server performs cyclic redundancy check (CRC) on the payload data to obtain the check value of the payload data.

From the technical effect perspective, in this application, the network interface card can further directly perform cyclic redundancy check on the payload data, to quickly obtain the check value of the payload data, and further quickly obtain the check value of the second service layer through calculation based on the check value of the payload data. This simplifies a calculation process of the check value of the second service layer, reduces a delay in a data transmission process, and improves data read performance.

In a feasible implementation, the gateway device is a switch, a router, or a server.

In a feasible implementation, both the first transmission control header and the second transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

According to a second aspect, an embodiment of this application provides a packet processing method. The method includes: A storage server obtains a third transmission control header and a check value of payload data, and obtains a check value of a third service layer through calculation based on the third transmission control header and the check value of the payload data, where the third service layer includes the third transmission control header and the payload data; and the third transmission control header is obtained based on a first transmission control header, the check value of the payload data is obtained through calculation based on the first transmission control header and a check value of a first service layer, the first transmission control header and the payload data are located in the first service layer in a first packet received by the storage server, and the first packet includes the first service layer and the check value of the first service layer. The storage server sends a third packet to a user device or a gateway device, where the third packet includes the third service layer and the check value of the third service layer.

From a technical effect perspective, after receiving the first packet, the storage server calculates the check value of the payload data based on the first transmission control header and the check value of the first service layer, and then calculates the check value of the third service layer based on the check value of the payload data and the third transmission control header. Compared with the conventional technology in which cyclic redundancy check is directly performed on payload data to obtain a check value of the payload data, this application simplifies a calculation amount in a calculation process, shortens a data transmission delay, and improves data transmission performance.

In a feasible implementation, the obtaining a check value of a third service layer through calculation based on the third transmission control header and the check value of the payload data includes: A processor in the storage server performs cyclic redundancy check (CRC) on the third transmission control header to obtain a check value of the third transmission control header, and performs an exclusive OR operation on the check value of the third transmission control header and the check value of the payload data to obtain the check value of the third service layer.

In a feasible implementation, the check value of the payload data is obtained by the processor in the storage server by performing an exclusive OR operation on a check value of the first transmission control header and the check value of the first service layer, and the check value of the first transmission control header is obtained by the processor by performing cyclic redundancy check (CRC) on the first transmission control header.

In a feasible implementation, the method further includes: The storage server writes the payload data and the check value of the payload data into a memory in the storage server; and after the storage server receives a data read request, reads the payload data and the check value of the payload data from the memory, and checks the payload data based on the check value of the payload data.

In a feasible implementation, the gateway device is a switch, a router, or a server.

In a feasible implementation, the third transmission control header is generated based on session information to which the first transmission control header is linked, and both the first transmission control header and the third transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

For technical effect of the foregoing embodiment, refer to related descriptions in the first aspect. Details are not described herein again.

According to a third aspect, an embodiment of this application provides a packet check method. The method includes: A gateway device receives a second packet sent by a storage server, where the second packet includes a second service layer and a check value of payload data, and the second service layer includes a second transmission control header and the payload data. The gateway device sends a fourth packet to a user device, where the fourth packet includes a fourth service layer and a check value of the fourth service layer, and the fourth service layer includes a fourth transmission control header and the payload data; and the fourth transmission control header is obtained based on the second transmission control header, and the check value of the fourth service layer is obtained through calculation based on the fourth transmission control header and the check value of the payload data.

From a technical effect perspective, because the second packet received by the gateway device includes the check value of the payload data, after obtaining the fourth transmission control header through update, the gateway device can directly obtain the check value of the fourth service layer through calculation based on the fourth transmission control header and the check value of the payload data. Compared with the conventional technology with a process in which a second packet does not include a check value of payload data, and a gateway device needs to first perform cyclic redundancy check on the payload data, this application simplifies a calculation process of the check value of the fourth service layer on the gateway device, and enables the gateway device to have a check capability. One check process is added to a data transmission process, and security in the transmission process is improved.

In a feasible implementation, the fourth transmission control header is generated based on session information to which the second transmission control header is linked; and the check value of the fourth service layer is obtained by performing an exclusive OR operation on a check value of the fourth transmission control header and the check value of the payload data, and the check value of the fourth transmission control header is obtained by performing cyclic redundancy check (CRC) on the fourth transmission control header.

From the technical effect perspective, the check value of the fourth transmission control header can be quickly obtained through calculation by performing the exclusive OR operation on the check value of the fourth transmission control header and the check value of the payload data. This overcomes a problem that the gateway device in the conventional technology cannot perform a check process on a fourth transmission control header due to a limitation of a calculation capability, enables the gateway device to have the check capability, adds the check process in the data transmission process, and improves security in the transmission process.

In a feasible implementation, the gateway device is a switch, a router, or a server.

In a feasible implementation, both the second transmission control header and the fourth transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

According to a fourth aspect, an embodiment of this application provides a packet check method. The method includes: A gateway device receives a third packet sent by a storage server, where the third packet includes a third service layer and a check value of the third service layer, and the third service layer includes a third transmission control header and payload data. The gateway device sends a fifth packet to a user device, where the fifth packet includes a fifth service layer and a check value of the fifth service layer, and the fifth service layer includes a fifth transmission control header and the payload data; and the fifth transmission control header is obtained based on the third transmission control header, the check value of the fifth service layer is obtained through calculation based on the fifth transmission control header and a check value of the payload data, and the check value of the payload data is obtained through calculation based on the third transmission control header and the check value of the third service layer.

From a technical effect perspective, even if the data packet received by the gateway device does not include the check value of the payload data, the gateway device can first obtain the check value of the payload data through calculation based on the third transmission control header and the check value of the third service layer in the received third packet, and then obtain the check value of the fifth service layer through calculation based on the check value of the payload data. Compared with that in the conventional technology in which cyclic redundancy check is directly performed on payload data, this process has a smaller calculation amount, overcomes a problem that a gateway device in the conventional technology cannot perform a check process on a fourth transmission control header due to a limitation of a calculation capability, and enables the gateway device to have a check capability. One check process is added to a data transmission process, and security in the transmission process is improved.

In a feasible implementation, the check value of the payload data is obtained by performing an exclusive OR operation on a check value of the third transmission control header and the check value of the third service layer, and the check value of the third transmission control header is obtained by performing cyclic redundancy check (CRC) on the third transmission control header.

In a feasible implementation, the fifth transmission control header is generated based on session information to which the third transmission control header is linked; and the check value of the fifth service layer is obtained by performing an exclusive OR operation on a check value of the fifth transmission control header and the check value of the payload data, and the check value of the fifth transmission control header is obtained by performing cyclic redundancy check (CRC) on the fifth transmission control header.

For technical effect of the foregoing embodiment, refer to related descriptions in the foregoing embodiment. Details are not described herein again.

In a feasible implementation, the gateway device is a switch, a router, or a server.

In a feasible implementation, both the third transmission control header and the fifth transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

According to a fifth aspect, an embodiment of this application provides a storage device. The device includes a processor, a memory, and a communication interface. The communication interface is configured to receive a first packet, where the first packet includes a first service layer and a check value of the first service layer, and the first service layer includes payload data. The processor is configured to obtain a check value of the payload data through calculation based on the first service layer and/or the check value of the first service layer. The communication interface is further configured to forward a second packet to a gateway device, where the second packet includes a second service layer, a check value of the second service layer, and the check value of the payload data; and the second service layer is obtained based on the first service layer, and the check value of the second service layer is obtained through calculation based on the second service layer and the check value of the payload data.

In a feasible implementation, the first service layer further includes a first transmission control header, the second service layer includes a second transmission control header and the payload data, and the second transmission control header is generated based on session information to which the first transmission control header is linked.

In a feasible implementation, the check value of the second service layer is obtained by performing an exclusive OR operation on a check value of the second transmission control header and the check value of the payload data, and the check value of the second transmission control header is obtained by performing cyclic redundancy check (CRC) on the second transmission control header.

In a feasible implementation, the processor is specifically configured to: perform cyclic redundancy check (CRC) on the first transmission control header to obtain a check value of the first transmission control header, and perform an exclusive OR operation on the check value of the first transmission control header and the check value of the first service layer to obtain the check value of the payload data.

In a feasible implementation, the memory is further configured to: write the payload data and the check value of the payload data into the memory; and after the storage device receives a data read request, read the payload data and the check value of the payload data from the memory, and check the payload data based on the check value of the payload data.

In a feasible implementation, the second transmission control header includes a first identifier, the storage device further includes a network interface card, and the network interface card is specifically configured to: after identifying the first identifier, perform cyclic redundancy check (CRC) on the payload data to obtain the check value of the payload data.

In a feasible implementation, the gateway device is a switch, a router, or a server.

In a feasible implementation, both the first transmission control header and the second transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

According to a sixth aspect, an embodiment of this application provides a storage device. The device includes a processor and a communication interface. The processor is configured to: obtain a third transmission control header and a check value of payload data, and obtain a check value of a third service layer through calculation based on the third transmission control header and the check value of the payload data, where the third service layer includes the third transmission control header and the payload data; and the third transmission control header is obtained based on a first transmission control header, the check value of the payload data is obtained through calculation based on the first transmission control header and a check value of a first service layer, the first transmission control header and the payload data are located in the first service layer in a first packet received by the storage server, and the first packet includes the first service layer and the check value of the first service layer. The communication interface is configured to forward a third packet to a user device or a gateway device, where the third packet includes the third service layer and the check value of the third service layer.

In a feasible implementation, when obtaining a check value of a third service layer through calculation based on the third transmission control header and the check value of the payload data, the processor is specifically configured to: perform cyclic redundancy check (CRC) on the third transmission control header to obtain a check value of the third transmission control header, and perform an exclusive OR operation on the check value of the third transmission control header and the check value of the payload data to obtain the check value of the third service layer.

In a feasible implementation, the check value of the payload data is obtained by the processor in the storage server by performing an exclusive OR operation on a check value of the first transmission control header and the check value of the first service layer, and the check value of the first transmission control header is obtained by the processor by performing cyclic redundancy check (CRC) on the first transmission control header.

In a feasible implementation, the processor is further configured to: write the payload data and the check value of the payload data into the memory; and after the storage device receives a data read request, read the payload data and the check value of the payload data from the memory, and check the payload data based on the check value of the payload data.

In a feasible implementation, the gateway device is a switch, a router, or a server.

In a feasible implementation, the third transmission control header is generated based on session information to which the first transmission control header is linked, and both the first transmission control header and the third transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

According to a seventh aspect, an embodiment of this application provides a network device. The network device includes a processor and a communication interface. The communication interface is configured to receive a second packet sent by a storage device, where the second packet includes a second service layer and a check value of payload data, and the second service layer includes a second transmission control header and the payload data. The communication interface is further configured to forward a fourth packet to a user device, where the fourth packet includes a fourth service layer and a check value of the fourth service layer, and the fourth service layer includes a fourth transmission control header and the payload data; and the fourth transmission control header is obtained based on the second transmission control header, and the check value of the fourth service layer is obtained by the processor through calculation based on the fourth transmission control header and the check value of the payload data.

In a feasible implementation, the fourth transmission control header is generated based on session information to which the second transmission control header is linked; and the check value of the fourth service layer is obtained by the processor by performing an exclusive OR operation on a check value of the fourth transmission control header and the check value of the payload data, and the check value of the fourth transmission control header is obtained by the processor by performing cyclic redundancy check (CRC) on the fourth transmission control header.

In a feasible implementation, the network device is a switch, a router, or a server.

In a feasible implementation, both the second transmission control header and the fourth transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

According to an eighth aspect, an embodiment of this application provides a network device. The network device includes a processor and a communication interface. The communication interface is configured to receive a third packet sent by a storage device, where the third packet includes a third service layer and a check value of the third service layer, and the third service layer includes a third transmission control header and payload data. The communication interface is further configured to send a fifth packet to a user device, where the fifth packet includes a fifth service layer and a check value of the fifth service layer, and the fifth service layer includes a fifth transmission control header and the payload data; and the fifth transmission control header is obtained based on the third transmission control header, the check value of the fifth service layer is obtained by the processor through calculation based on the fifth transmission control header and a check value of the payload data, and the check value of the payload data is obtained by the processor through calculation based on the third transmission control header and the check value of the third service layer.

In a feasible implementation, the check value of the payload data is obtained by performing an exclusive OR operation on a check value of the third transmission control header and the check value of the third service layer, and the check value of the third transmission control header is obtained by performing cyclic redundancy check (CRC) on the third transmission control header.

In a feasible implementation, the fifth transmission control header is generated based on session information to which the third transmission control header is linked; and the check value of the fifth service layer is obtained by performing an exclusive OR operation on a check value of the fifth transmission control header and the check value of the payload data, and the check value of the fifth transmission control header is obtained by performing cyclic redundancy check (CRC) on the fifth transmission control header.

In a feasible implementation, the network device is a switch, a router, or a server.

In a feasible implementation, both the third transmission control header and the fifth transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

According to a ninth aspect, an embodiment of this application provides a chip system. The chip system includes at least one processor, a memory, and an interface circuit; the memory, the interface circuit, and the at least one processor are interconnected through a line; the at least one memory stores instructions; and when the instructions are executed by the processor, the method according to any one of the first aspect, the second aspect, the third aspect, or the fourth aspect is implemented.

According to a tenth aspect, an embodiment of this application provides a computer-readable storage medium. The computer-readable storage medium stores a computer program, and when the computer program is executed, the method according to any one of the first aspect, the second aspect, the third aspect, or the fourth aspect is implemented.

According to an eleventh aspect, an embodiment of this application provides a computer program. The computer program includes instructions, and when the computer program is executed, the method according to any one of the first aspect, the second aspect, the third aspect, or the fourth aspect is implemented.

### BRIEF DESCRIPTION OF DRAWINGS

The following describes accompanying drawings used in embodiments of this application.
FIG. 1a and FIG. 1b are schematic diagrams of two packet formats according to an embodiment of this application;
FIG. 2a to FIG. 2c are examples of three specific packet formats according to an embodiment of this application;
FIG. 3a and FIG. 3b are schematic diagrams of two system architectures according to an embodiment of this application;
FIG. 4 shows a packet processing method according to an embodiment of this application;
FIG. 5 shows a packet check method according to an embodiment of this application;
FIG. 6 shows a packet processing method according to an embodiment of this application;
FIG. 7 shows a packet check method according to an embodiment of this application;
FIG. 8 is a schematic diagram of a data storage process according to this application;
FIG. 9 is a schematic diagram of a data read process according to this application;
FIG. 10 is a schematic diagram of a communication process between a user device and a storage server according to this application;
FIG. 11 is a schematic diagram of a structure of a storage device according to an embodiment of this application; and
FIG. 12 is a schematic diagram of a structure of a network device according to an embodiment of this application.

### DESCRIPTION OF EMBODIMENTS

The following describes embodiments of this application with reference to accompanying drawings in embodiments of this application. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

In the specification, claims, and accompanying drawings of this application, the terms "first", "second", "third", "fourth" and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. "An embodiment" mentioned in the specification indicates that a particular characteristic, structure or feature described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

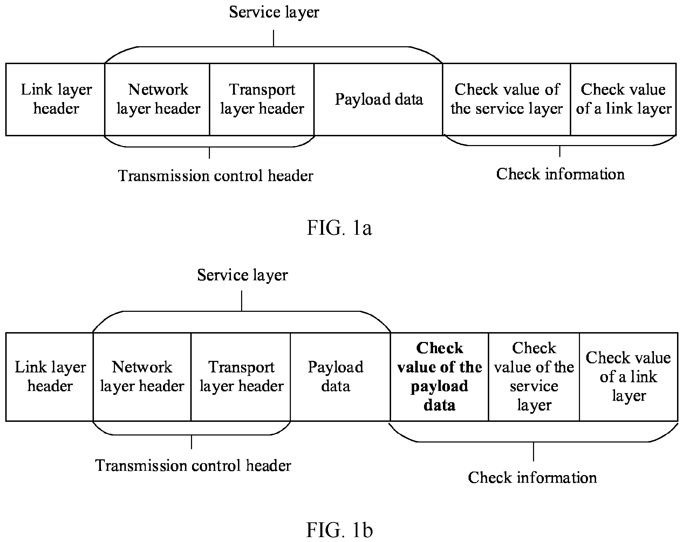

The following describes terms in this application.
(1) Cyclic redundancy check (Cyclic Redundancy Check, CRC): Cyclic redundancy check is a calculation method for checking accuracy of digital transmission on a communication link (an agreed relationship between a data bit and a parity bit is established by using a mathematical operation). A transmitter computer obtains, through calculation by using a formula, a value of information included in transmitted data and attaches the value behind the transmitted data. A receiver computer performs same calculation on the same data and should obtain a same result. If the two CRC results are inconsistent, it indicates that an error occurs during sending. In this case, the receiver computer may request the transmitter computer to retransmit the data.
(2) Remote direct data access (Remote Direct Memory Access, RDMA): Remote direct data access directly transmits data from a memory in one computer to another computer, without intervention of operating systems in the two computers. RDMA directly transmits data to a storage area in a computer through a network, quickly moves the data from a system to a remote system memory, without affecting an operating system, and performs memory copy by bypassing the operating system, without intervention of a remote node CPU, thereby reducing CPU resource consumption. Network protocols supporting RDMA include a remote direct memory access over converged Ethernet (RDMA over Converged Ethernet, RoCE) and an internet wide-area remote direct memory access protocol (internet Wide-area RDMA Protocol, iWARP).
(3) Gateway (Gateway) device: A gateway device, also referred to as an inter-network connector or a protocol converter, is a computer system or device that provides a data conversion service between multiple networks. In other words, a gateway device is a connector between different networks, namely, a device that is used for "negotiation" when data is transmitted from one network to another network.
(4) Transmission control protocol/Internet protocol (Transmission Control Protocol/Internet Protocol, TCP/IP): A transmission control protocol/An internet protocol are a protocol family that can implement information transmission between multiple different networks. The TCP/IP not only refer to the TCP and the IP, but also refer to a protocol family including protocols, such as a file transfer protocol (File Transfer Protocol, FTP), a simple mail transfer protocol (Simple Mail Transfer Protocol, SMTP), a TCP, a user datagram protocol (User Datagram Protocol, UDP), and an IP. A TCP/IP reference model (Reference Model) may include a link layer, a network layer, a transport layer, and an application layer.
(5) Service layer: A service layer is a part of a packet except a link layer header and check information (or referred to as a check value), as shown in FIG. 1a and FIG. 1b. The service layer includes a transmission control header and payload data, where the transmission control header is protocol headers of all protocols included in the service layer, and a part of the service layer except the transmission control header is the payload data. The payload data may also be referred to as to-be-transmitted data or a message payload. Specifically, the transmission control header may include a network layer header and a transport layer header. A network layer protocol includes at least one of an internet protocol version IPv4, an IPv6, an address resolution protocol (Address Resolution Protocol, ARP), or a multiprotocol label switching (MultiProtocol Label Switching, MPLS) protocol. A transport layer protocol includes at least one of a transmission control protocol (TCP), a user datagram protocol (UDP), a generic routing encapsulation (Generic Routing Encapsulation, GRE) protocol, a datagram congestion control protocol (Datagram Congestion Control Protocol, DCCP), an InfiniBand (InfiniBand, IB) protocol, or a stream control transmission protocol (Stream Control Transmission Protocol, STCP).

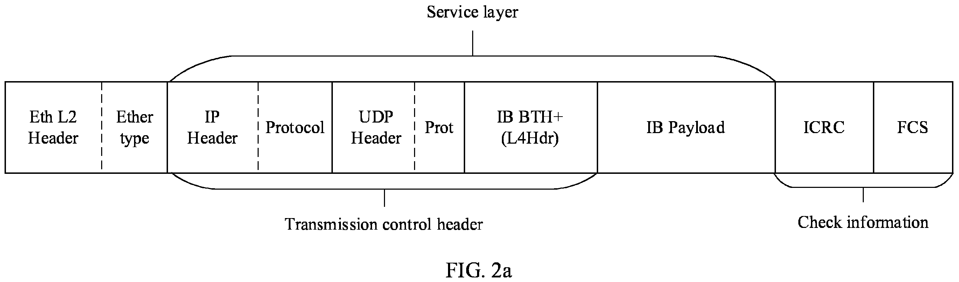

For example, in packet (RoCEv2 packet for short below) formats in the RoCE version 2 specification shown in FIG. 2a to FIG. 2c, a service layer includes a network layer header (IP header), a transport layer header (UDP header and IB BTH header), and payload data (IB Payload).

FIG. 1a and FIG. 1b are schematic diagrams of two packet formats according to an embodiment of this application. As shown in FIG. 1a, a packet includes a link layer header, a service layer, and check information, where the service layer includes a network layer header, a transport layer header, and payload data; and the check information includes a check value of the service layer and a check value of a link layer.

A link layer protocol may be at least one of an Ethernet protocol, a wireless fidelity (Wireless Fidelity, Wi-Fi) protocol, and a point to point protocol (Point To Point Protocol, PPP). A network layer protocol may be at least one of an internet protocol version IPv4, an IPv6, an address resolution protocol (ARP), or a multiprotocol label switching (MPLS) protocol. A transport layer protocol is one or more of a transmission control protocol (TCP), a user datagram protocol (UDP), a generic routing encapsulation (GRE) protocol, a datagram congestion control protocol (DCCP), a stream control transmission protocol (STCP), or an InfiniBand (IB) protocol.

A packet format shown in FIG. 1a is formats of a first packet, a third packet, and a fifth packet in the following embodiments.

Optionally, the check value of the service layer may be a check value obtained through calculation by performing cyclic redundancy check CRC or another check algorithm on the service layer.

A difference between the packet format shown in FIG. 1b and a packet format shown in FIG. 1a lies in that the check information in the packet shown in FIG. 1b further includes a check value of the payload data.

The packet format shown in FIG. 1b may be formats of a second packet and a fourth packet in the following embodiments.

FIG. 2a to FIG. 2c are examples of three specific packet formats according to an embodiment of this application. The three packets are in the packet formats that comply with the RoCEv2 specification.

A packet shown in FIG. 2a is a specific example corresponding to the packet format in FIG. 1a. In FIG. 2a, the Ethernet Eth is a link layer, an IP may be a network layer, and a UDP and an IB are a transport layer. An Eth L2 header is a link layer header, an IP header is a network layer header, a UDP header and an IB BTH+ (L4hdr) are a transport layer header, an IB payload is payload data, and invariant cyclic redundancy check (Invariant Cyclic Redundancy Check, ICRC) and a frame check sequence (Frame Check Sequence, FCS) are check information, where the ICRC is a check value of the service layer, and the FCS is a check value of the link layer.

The service layer includes the IP header, the UDP header, the IB BTH+ (L4hdr), and the IB payload. The transmission control header includes the IP header, the UDP header, and the IB BTH+ (L4hdr). The check information includes the ICRC and the FCS.

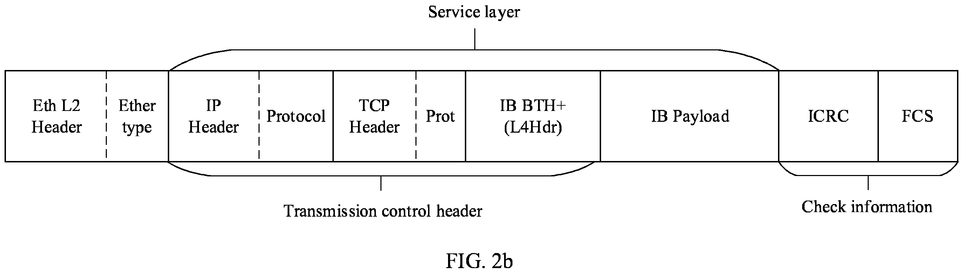

A packet shown in FIG. 2b is also a specific example corresponding to the packet format in FIG. 1a. In FIG. 2b, the Ethernet Eth is a link layer, an IP may be a network layer, and a TCP and an IB are a transport layer. An Eth L2 header is a link layer header, an IP header is a network layer header, a TCP header and an IB BTH+ (L4hdr) are a transport layer header, an IB payload is payload data, and invariant cyclic redundancy check (Invariant Cyclic Redundancy Check, ICRC) and a frame check sequence (Frame Check Sequence, FCS) are check information.

The service layer includes the IP header, the TCP header, the IB BTH+ (L4hdr), and the IB payload. The transmission control header includes the IP header, the TCP header, and the IB BTH+ (L4hdr). The check information includes the ICRC and the FCS.

It should be understood that FIG. 2a and FIG. 2b are merely specific examples corresponding to the packet format in FIG. 1a, and do not constitute a limitation on the packet format in FIG. 1a. Persons skilled in the art may also use another specific packet format corresponding to the format in FIG. 1a.

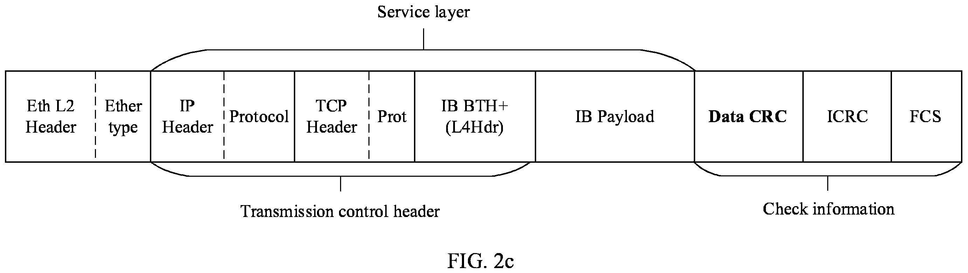

A packet shown in FIG. 2c is a specific example corresponding to the packet format in FIG. 1b. In FIG. 2c, the Ethernet Eth is a link layer, an IP may be a network layer, and a TCP and an IB are a transport layer. An Eth L2 header is a link layer header, an IP header is a network layer header, a TCP header and an IB BTH+ (L4hdr) are a transport layer header, an IB payload is payload data, and a check value of the payload data Data CRC, invariant cyclic redundancy check (Invariant Cyclic Redundancy Check, ICRC), and a frame check sequence (Frame Check Sequence, FCS) are check information.

The service layer includes the IP header, the TCP header, the IB BTH+ (L4hdr), and the IB payload. The transmission control header includes the IP header, the TCP header, and the IB BTH+ (L4hdr). The check information includes the Data CRC, the ICRC, and the FCS.

It should be understood that FIG. 2c is merely a specific example corresponding to the packet format in FIG. 1b, and does not constitute a limitation on the packet format in FIG. 1b. Persons skilled in the art may also use another specific packet format corresponding to the format in FIG. 1b.

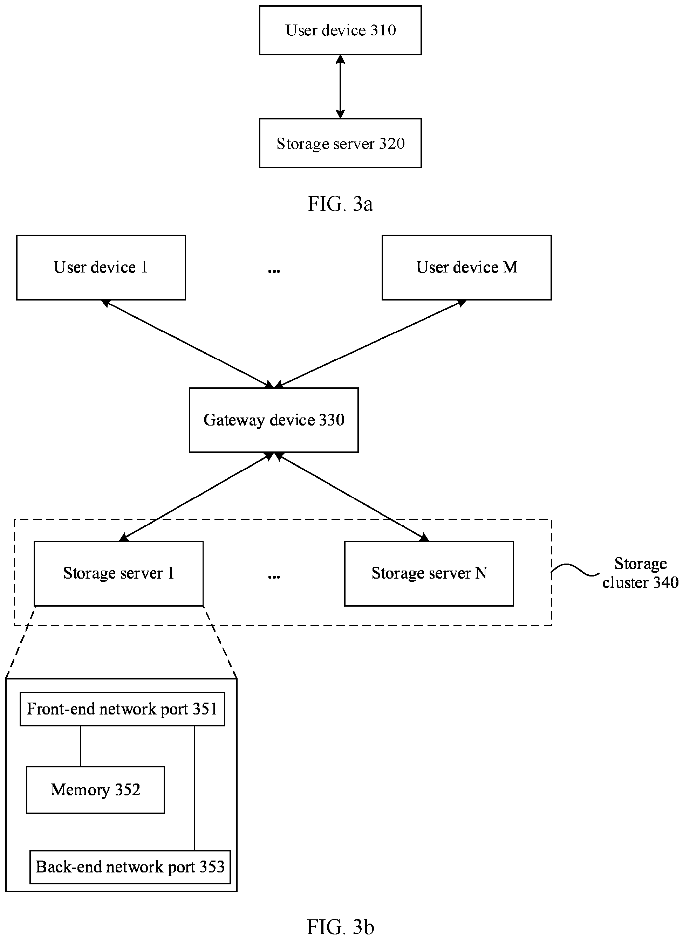

FIG. 3a and FIG. 3b are schematic diagrams of two system architectures according to an embodiment of this application.

As shown in FIG. 3a, a system architecture includes a user device 310 and a storage server 320. A communication process between the user device 310 and the storage server 320 is as follows: The user device 310 sends a packet to the storage server 320 in the format shown in FIG. 1a, and the storage server 320 stores payload data in the packet in a memory in the storage server 320. After receiving a data read request from the user device 310, the storage server 320 reads the payload data from the memory in the storage server 320, encapsulates the payload data into a corresponding packet, and sends the packet to the user device 310.

As shown in FIG. 3b, a system architecture includes M user devices (a user device 1, ..., a user device M), a gateway device 330, and a storage cluster 340. The storage cluster 340 includes N storage servers (a storage server 1, ..., a storage server N), and M and N are positive integers greater than or equal to 2. The M user devices communicate with the storage cluster 340 via the gateway device 330.

Optionally, FIG. 3b further shows a hardware structure of a storage server. As shown in FIG. 3b, the storage server 1 includes a front-end network port 351, a memory 352, and a back-end network port 353. The front-end network port 351 is configured to set up a communication connection to the gateway device 330. The memory is configured to store data forwarded by a user device via the gateway device 330. The back-end network port 353 is connected to the front-end network port 351, and is configured to connect to an extended memory, like solid state hardware (Solid State Disk, SSD) or a USB flash drive.

The memory 352 may be a readable and writable memory like a flash Flash memory, a hard disk, or an optical disc. This is not limited in this application.

It should be understood that a hardware structure of each storage server in the storage server 320 in FIG. 3a and the storage cluster 340 in FIG. 3b may be the same as a hardware structure of the storage server 1.

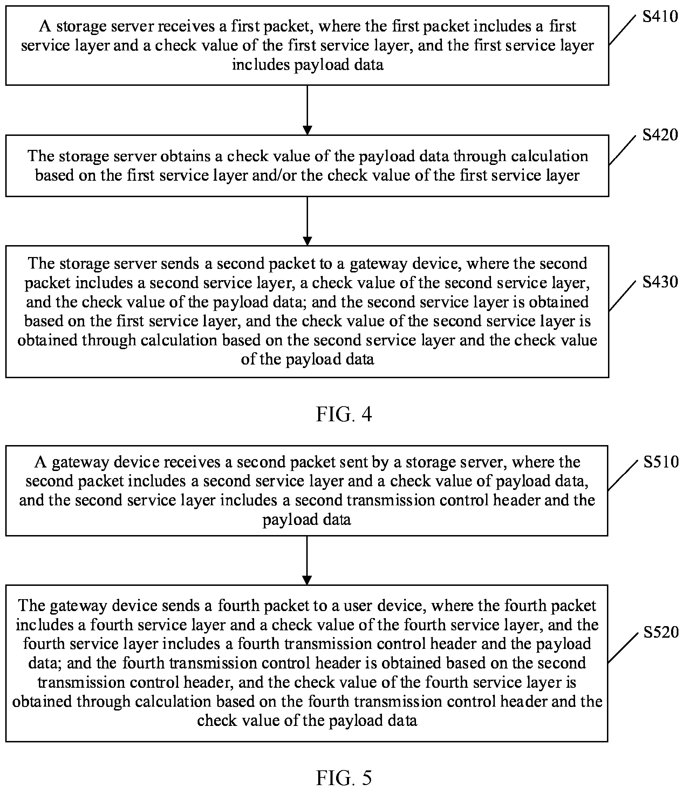

FIG. 4 shows a packet processing method according to an embodiment of this application. The method includes step S410, step S420, and step S430. The method embodiment described in FIG. 4 is applied to the system architecture shown in FIG. 3b.

Step S410: A storage server receives a first packet, where the first packet includes a first service layer and a check value of the first service layer, and the first service layer includes payload data.

The first packet may be in the packet format shown in FIG. 1a, and may be specifically any packet in FIG. 2a, FIG. 2b, or another possible packet. That is, the first service layer further includes a first transmission control header.

Optionally, the check value of the first service layer is obtained through calculation by performing cyclic redundancy check CRC or by using another check algorithm on data in the first service layer.

Optionally, after receiving the first packet, the storage server decapsulates the first packet to obtain the first transmission control header; extracts a corresponding keyword based on the first transmission control header; and links to corresponding session information based on the keyword.

Step S420: The storage server obtains a check value of the payload data through calculation based on the first service layer and/or the check value of the first service layer.

Optionally, the storage server may calculate the check value of the payload data in two manners: (1) Obtain the check value of the payload data through calculation based on the first service layer and/or the check value of the first service layer; and (2) Calculate the check value of the payload data based on the data in the first service layer.

The first calculation manner is specifically as follows: After the first packet is received and decapsulated, a processor in the storage server obtains the check value of the payload data through calculation based on the first transmission control header and the check value of the first service layer. The second calculation manner is specifically as follows: A network interface card in the storage server directly checks the payload data to obtain the check value of the payload data. Specific calculation processes of the two manners are described in detail in the following embodiments.

Step S430: The storage server sends a second packet to a gateway device, where the second packet includes a second service layer, a check value of the second service layer, and the check value of the payload data.

The second service layer is obtained based on the first service layer, and the check value of the second service layer is obtained through calculation based on the second service layer and the check value of the payload data.

Specifically, after receiving a data read request, the storage server obtains a second transmission control header, the payload data, and the check value of the payload data, obtains the check value of the second service layer through calculation based on the second transmission control header and the check value of the payload data, encapsulates the second transmission control header, the payload data, the check value of the payload data, and the check value of the second service layer into the second packet, and sends the second packet to the gateway device.

Optionally, the first service layer further includes the first transmission control header, the second service layer includes the second transmission control header and the payload data, and the second transmission control header is generated based on session information to which the first transmission control header is linked.

Specifically, after receiving the data read request, the storage server extracts the corresponding keyword from the session information to which the first transmission control header is linked, to generate the second transmission control header.

A session to which the first transmission control header is linked includes corresponding protocol information, such as a network layer protocol and a transport layer protocol.

Optionally, the check value of the second service layer is obtained by performing an exclusive OR operation on a check value of the second transmission control header and the check value of the payload data, and the check value of the second transmission control header is obtained by performing cyclic redundancy check (CRC) on the second transmission control header.

The following describes in detail the two manners of calculating, by the storage server, the check value of the payload data in step S420.
(1) The storage server calculates the check value of the payload data by using the processor in the storage server.

Optionally, that the storage server obtains a check value of the payload data through calculation based on the first service layer and/or the check value of the first service layer includes: The processor in the storage server performs cyclic redundancy check (CRC) on the first transmission control header to obtain a check value of the first transmission control header, and performs an exclusive OR operation on the check value of the first transmission control header and the check value of the first service layer to obtain the check value of the payload data.

Specifically, after receiving the first packet, the storage server decapsulates the first packet to obtain the first transmission control header, the payload data, and the check value of the first service layer. Then, the processor in the storage server performs cyclic redundancy check (CRC) on the first transmission control header to obtain the check value of the first transmission control header. The processor performs the exclusive OR operation on the check value of the first transmission control header and the check value of the first service layer to obtain the check value of the payload data.

Optionally, the method further includes: The storage server writes the payload data and the check value of the payload data into a memory in the storage server; and after the storage server receives the data read request, reads the payload data and the check value of the payload data from the memory, and checks the payload data based on the check value of the payload data.

Specifically, after the processor obtains the check value of the payload data through calculation, the storage server writes both the payload data and the check value of the payload data into the memory in the storage server.

Optionally, after the storage server receives the data read request, the storage server reads the payload data and the check value of the payload data from the memory, and performs jump check on the read payload data based on the check value of the payload data.

Specifically, cyclic redundancy check is performed once on the read payload data to obtain a calculation result, and the calculation result is compared with the check value of the payload data read from the memory to determine whether the calculation result is the same as the check value of the payload data read from the memory. If the calculation result is the same as the check value of the payload data read from the memory, it indicates that the written payload data is the same as the read payload data; or if the calculation result is different from the check value of the payload data read from the memory, it indicates that the payload data read from the memory is changed compared with the payload data written previously.

From a technical effect perspective, the foregoing jump check process can further ensure data security of the payload data in a storage process.

It should be noted that in this manner of calculating the check value of the payload data, the check value of the second service layer is obtained by the processor through calculation.

(2) The storage server calculates the check value of the payload data by using the network interface card in the storage server.

Optionally, the second transmission control header includes a first identifier, and that the storage server obtains a check value of the payload data through calculation based on the first service layer and/or the check value of the first service layer includes: After identifying the first identifier, the network interface card in the storage server performs cyclic redundancy check (CRC) on the payload data to obtain the check value of the payload data.

Specifically, in this manner, after receiving the first data packet, the storage server decapsulates the first packet to obtain the payload data, and then writes the payload data into a memory in the storage server.

Optionally, one first identifier is added to a protocol header of a transport layer protocol, that is, a transmission control header in a packet includes the first identifier. After the second transmission control header is obtained and the first identifier in the second transmission control header is identified, the network interface card in the storage server performs cyclic redundancy check (CRC) on the payload data read from the memory to obtain the check value of the payload data.

Further, optionally, the added first identifier may be located in a reserved field (namely, Reserved7) in an IB protocol header shown in Table 1.

**Table 1 Base transport header structure of an IB protocol**

| Bits Bytes | 31-24 | | | 23-16 | | | | 15-8 | 7-0 |
|---|---|---|---|---|---|---|---|---|---|
| 0-3 | QPCode | | | SE | M | Pad | TVer | Partition Key | |
| 4-7 | F/Res1^{a} | B/Res1^{a} | Reserved 6^{a} | Destination QP | | | | | |
| 8-11 | A | Reserved 7 | | PSN-Packet Sequence Number | | | | | |

Optionally, both the first transmission control header and the second transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

A service layer is a part of a packet except a link layer header and check information, and the service layer includes a transmission control header and payload data, where the transmission control header is protocol headers of all protocols included in the service layer, and a part of the service layer except the transmission control header is the payload data.

Optionally, types and a quantity of protocols included in the transmission control header are not limited in this application.

Optionally, the gateway device is a switch, a router, a server, or another device having a packet forwarding and redirection function. This is not limited in this application.

It should be noted that in this manner of calculating the check value of the payload data, the check value of the second service layer is obtained by the network interface card through calculation.

FIG. 5 shows a packet check method according to an embodiment of this application. The method includes step S510 and step S520. This embodiment is applied to the system architecture shown in FIG. 3b.

Step S510: A gateway device receives a second packet sent by a storage server, where the second packet includes a second service layer and a check value of payload data, and the second service layer includes a second transmission control header and the payload data.

Specifically, after receiving the second packet, the gateway device decapsulates the second packet to obtain the second service layer and the check value of the payload data; and further decapsulates the second service layer to obtain the second transmission control header and the payload data.

It should be understood that the second packet in the embodiment in FIG. 5 may be the second packet sent by the storage server in the embodiment in FIG. 4.

Step S520: The gateway device sends a fourth packet to a user device, where the fourth packet includes a fourth service layer and a check value of the fourth service layer, and the fourth service layer includes a fourth transmission control header and the payload data.

The fourth transmission control header is obtained based on the second transmission control header, and the check value of the fourth service layer is obtained through calculation based on the fourth transmission control header and the check value of the payload data.

Optionally, the fourth transmission control header is generated based on session information to which the second transmission control header is linked.

Specifically, the gateway device performs redirection based on the second transmission control header, namely, extracts a corresponding keyword from the second transmission control header, links to the corresponding session information based on the keyword, and then, generates the fourth transmission control header based on protocol information stored in the session information. The fourth transmission control header indicates a location of the user device to which the fourth packet is sent.

Optionally, the check value of the fourth service layer is obtained by performing an exclusive OR operation on a check value of the fourth transmission control header and the check value of the payload data, and the check value of the fourth transmission control header is obtained by performing cyclic redundancy check (CRC) on the fourth transmission control header.

Specifically, after obtaining the fourth transmission control header, the gateway device performs cyclic redundancy check (CRC) on the fourth transmission control header to obtain the check value of the fourth transmission control header; and then, performs the exclusive OR operation on the check value of the fourth transmission control header and the check value of the payload data to obtain the check value of the fourth service layer.

From a technical effect perspective, because the second packet includes the check value of the payload data, the gateway device can directly obtain the check value of the fourth service layer through calculation based on the check value of the payload data and the fourth transmission control header. This simplifies a calculation process of the check value of the fourth service layer in the conventional technology, and enables the gateway device to have a check capability. One check process is added to a data transmission process, and security is improved.

Optionally, the gateway device is a switch, a router, a server, or another device having a packet forwarding and redirection function. This is not limited in this application.

Optionally, both the second transmission control header and the fourth transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

Specifically, for structures and content of the second transmission control header and the fourth transmission control header, refer to corresponding descriptions in the foregoing embodiment. Details are not described herein again.

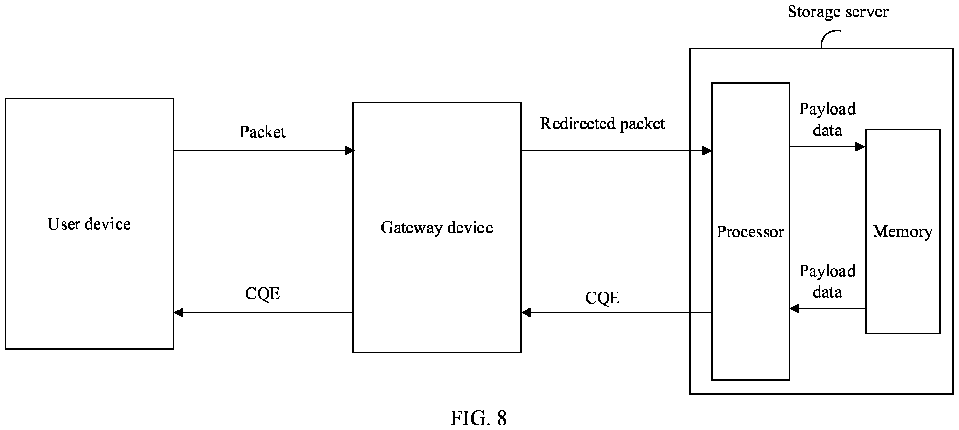

FIG. 8 is a schematic diagram of a data storage process according to this application. The data storage process corresponds to method embodiments shown in FIG. 4 and FIG. 5.

As shown in FIG. 8, a user device encapsulates to-be-stored data (namely, payload data in embodiments of this application) into a packet and sends the packet to a gateway device. The packet is redirected by the gateway device and then a redirected packet is forwarded to a storage server. The packet received by the storage server from the gateway device is the first packet in the foregoing embodiments.

After decapsulating the first packet, the storage server obtains the payload data, and obtains a check value of the payload data through calculation; and then, writes the payload data into a memory in the storage server, or writes the payload data and the check value (not shown in FIG. 8) of the payload data into a memory in the storage server.

For a specific process, refer to the descriptions in embodiments in FIG. 4 and FIG. 5. Details are not described herein again.

After writing the payload data and the check value of the payload data into the memory, the storage server sends a task completion report to the gateway device, that is, generates a completion queue element (Completion Queue Element, CQE), and stores the completion queue element into a completion queue (Completion Queue, CQ). The storage server sends the completion queue element to the gateway device, and the gateway device forwards the completion queue element to the user device.

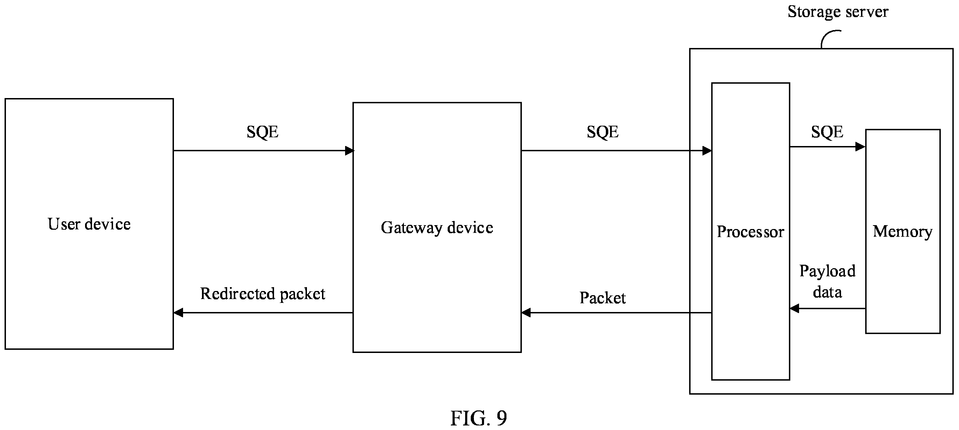

FIG. 9 is a schematic diagram of a data read process according to this application. The data read process corresponds to method embodiments shown in FIG. 4 and FIG. 5.

As shown in FIG. 9, a user device sends a data read request, where the read request is placed in a send queue (Send Queue, SQ) of the user device as a send queue element (Send Queue Element, SQE). The user device sends the data read request in a sequence of the SQE in the SQ. After receiving the data read request, a gateway device forwards the data read request to a storage server.

After receiving the data read request, the storage server performs encapsulation in the manner described in the foregoing embodiments in FIG. 4 and FIG. 5, to obtain a packet (corresponding to the second packet in the foregoing method embodiments) including payload data and a check value of the payload data, or obtain a packet (corresponding to the third packet in the foregoing method embodiments) including payload data; and sends the packet to the gateway device. The gateway device performs redirection on the packet and then forwards the packet to the user device.

Specifically, for a process in which the storage server encapsulates the packet after receiving the data read request, refer to the descriptions in embodiments in FIG. 4 and FIG. 5. Details are not described herein again.

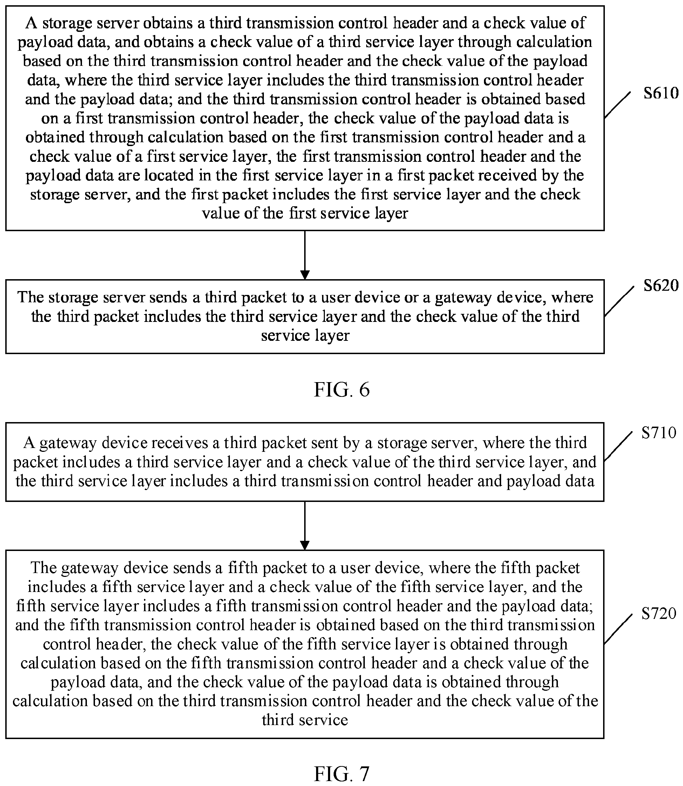

FIG. 6 shows a packet processing method according to an embodiment of this application. The method includes step S610 and step S620. The method embodiment described in FIG. 6 is applied to the system architecture shown in FIG. 3a or FIG. 3b.

Step S610: A storage server obtains a third transmission control header and a check value of payload data, and obtains a check value of a third service layer through calculation based on the third transmission control header and the check value of the payload data, where the third service layer includes the third transmission control header and the payload data; and the third transmission control header is obtained based on a first transmission control header, the check value of the payload data is obtained through calculation based on the first transmission control header and a check value of a first service layer, the first transmission control header and the payload data are located in the first service layer in a first packet received by the storage server, and the first packet includes the first service layer and the check value of the first service layer.

Specifically, the storage server receives the first packet, and decapsulates the first packet to obtain the first service layer and the check value of the first service layer; and further decapsulates the first service layer to obtain the first transmission control header and the payload data.

Optionally, the check value of the payload data is obtained by a processor in the storage server by performing an exclusive OR operation on a check value of the first transmission control header and the check value of the first service layer, and the check value of the first transmission control header is obtained by the processor by performing cyclic redundancy check (CRC) on the first transmission control header.

The check value of the first service layer is obtained by performing cyclic redundancy check (CRC) on data in the first service layer.

Optionally, the method further includes: The storage server writes the payload data and the check value of the payload data into a memory in the storage server; and after the storage server receives a data read request, reads the payload data and the check value of the payload data from the memory, and checks the payload data based on the check value of the payload data.

Specifically, for this process, refer to the descriptions in the embodiment in FIG. 4. Details are not described herein again.

Optionally, the third transmission control header is generated based on session information to which the first transmission control header is linked.

Specifically, a process of generating the third transmission control header is correspondingly the same as a process of generating the second transmission control header in the embodiment in FIG. 4. Details are not described herein again.

Optionally, the obtaining a check value of a third service layer through calculation based on the third transmission control header and the check value of the payload data includes: A processor in the storage server performs cyclic redundancy check (CRC) on the third transmission control header to obtain a check value of the third transmission control header, and performs an exclusive OR operation on the check value of the third transmission control header and the check value of the payload data to obtain the check value of the third service layer.

Specifically, the processor in the storage server obtains the check value of the third service layer through calculation based on the third transmission control header and the check value of the payload data. For a specific calculation process, refer to a process of calculating the check value of the second service layer in the embodiment in FIG. 4. Details are not described herein again.

Step S620: The storage server sends a third packet to a user device or a gateway device, where the third packet includes the third service layer and the check value of the third service layer.

Specifically, the storage server encapsulates the third service layer and the check value of the third service layer that are obtained or obtained through calculation in the foregoing step to obtain the third packet, and sends the third packet to the user device or the gateway device.

Optionally, the gateway device is a switch, a router, a server, or another device having a packet forwarding and redirection function. This is not limited in this application.

Optionally, both the first transmission control header and the third transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

Specifically, refer to the corresponding descriptions in the embodiment in FIG. 4. Details are not described herein again.

FIG. 7 shows a packet check method according to an embodiment of this application. The method includes step S710 and step S720. This embodiment is applied to the system architecture shown in FIG. 3a or FIG. 3b.

Step S710: A gateway device receives a third packet sent by a storage server, where the third packet includes a third service layer and a check value of the third service layer, and the third service layer includes a third transmission control header and payload data.

Specifically, after receiving the third packet, the gateway device decapsulates the third packet to obtain the third service layer and the check value of the third service layer; and further decapsulates the third service layer to obtain the third transmission control header and the payload data.

It should be understood that the third packet in the embodiment in FIG. 7 may be the third packet sent by the storage server in the embodiment in FIG. 5, that is, the third packet does not include the check value of the payload data.

Step S720: The gateway device sends a fifth packet to a user device, where the fifth packet includes a fifth service layer and a check value of the fifth service layer, and the fifth service layer includes a fifth transmission control header and the payload data; and the fifth transmission control header is obtained based on the third transmission control header, the check value of the fifth service layer is obtained through calculation based on the fifth transmission control header and a check value of the payload data, and the check value of the payload data is obtained through calculation based on the third transmission control header and the check value of the third service layer.

Specifically, before the gateway device performs redirection based on the third transmission control header, the gateway device may quickly obtain the check value of the payload data through calculation based on the third transmission control header and the check value of the third service layer.

Optionally, the check value of the payload data is obtained by performing an exclusive OR operation on a check value of the third transmission control header and the check value of the third service layer, and the check value of the third transmission control header is obtained by performing cyclic redundancy check (CRC) on the third transmission control header.

After the check of the payload data is obtained through calculation, the fifth transmission control header is generated based on the third transmission control header.

Optionally, the fifth transmission control header is generated based on session information to which the third transmission control header is linked.

Specifically, for a specific process of the fifth transmission control header, refer to a process of generating the fourth transmission control header. Details are not described herein again.

Optionally, the check value of the fifth service layer is obtained by performing an exclusive OR operation on a check value of the fifth transmission control header and the check value of the payload data, and the check value of the fifth transmission control header is obtained by performing cyclic redundancy check (CRC) on the fifth transmission control header.

Specifically, for a process of calculating the check value of the fifth service layer, refer to a process of calculating the check value of the fourth service layer. Details are not described herein again.

Optionally, the gateway device is a switch, a router, a server, or another device having a packet forwarding and redirection function. This is not limited in this application.

Optionally, both the third transmission control header and the fifth transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

Specifically, for structures and content of the third transmission control header and the fifth transmission control header, refer to corresponding descriptions in the foregoing embodiment. Details are not described herein again.

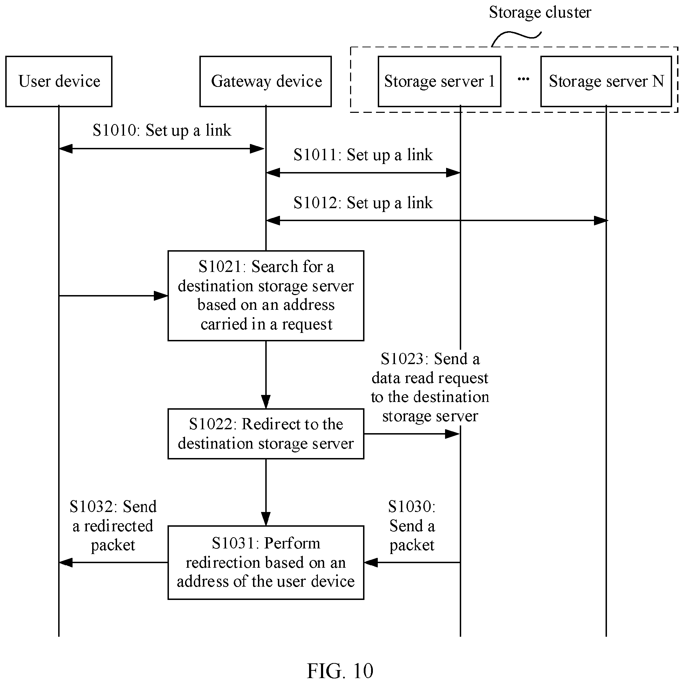

FIG. 10 is a schematic diagram of a communication process between a user device and a storage server according to this application. The communication process corresponds to the system architecture shown in FIG. 3b, that is, corresponds to embodiments that describe a communication process between the user device, the gateway device, and the storage server in FIG. 4, FIG. 5, FIG. 6, and FIG. 7.

FIG. 10 shows a process in which the user device reads data from the storage server. First, a link is set up between the user device and a gateway device (step S1010), and a link is set up between the gateway device and each storage server in a storage cluster 340 (corresponding to step S1011 and step S1012).

The user device sends a data read request to the gateway device. After receiving the data read request, the gateway device performs step S 1021 of searching for a destination storage server (or referred to as a storage node) based on an address carried in the request, performs step S 1022 of redirecting to the destination storage server, and performs step S 1023 of sending the data read request to the destination storage server.

After receiving the data read request, the storage server encapsulates payload data into a packet (the second packet or the third packet in the foregoing embodiment), and performs step S1030 of sending the packet. The gateway device performs step S1031 of performing redirection based on an address of the user device, and performs step S1032 of sending a redirected packet (namely, the fourth packet or the fifth packet in the foregoing embodiment).

It should be understood that the gateway device in embodiments of this application may be an RDMA gateway, an NVMe protocol (Non-volatile Memory Express Over Fabric, NOF) gateway carried on a network end, an RDMA-NOF hybrid gateway, or another type of gateway. This is not limited in this application.

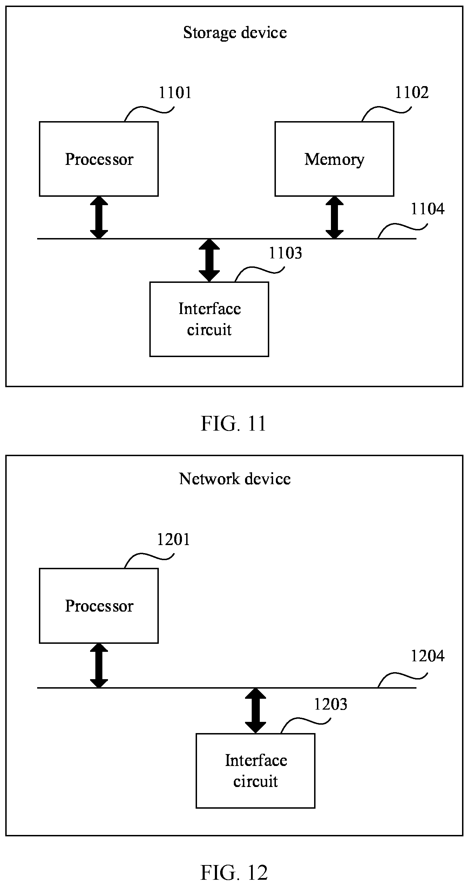

FIG. 11 is a schematic diagram of a structure of a storage device according to an embodiment of this application. The storage device includes a processor 1101, a memory 1102, a communication interface 1103, and a bus 1104.

The communication interface 1103 is configured to receive a first packet, where the first packet includes a first service layer and a check value of the first service layer, and the first service layer includes payload data. The processor 1101 is configured to obtain a check value of the payload data through calculation based on the first service layer and/or the check value of the first service layer. The communication interface 1103 is further configured to forward a second packet to a gateway device, where the second packet includes a second service layer, a check value of the second service layer, and the check value of the payload data; and the second service layer is obtained based on the first service layer, and the check value of the second service layer is obtained through calculation based on the second service layer and the check value of the payload data.

In a feasible implementation, the first service layer further includes a first transmission control header, the second service layer includes a second transmission control header and the payload data, and the second transmission control header is generated based on session information to which the first transmission control header is linked.

In a feasible implementation, the check value of the second service layer is obtained by performing an exclusive OR operation on a check value of the second transmission control header and the check value of the payload data, and the check value of the second transmission control header is obtained by performing cyclic redundancy check (CRC) on the second transmission control header.

In a feasible implementation, the processor 1101 is specifically configured to: perform cyclic redundancy check (CRC) on the first transmission control header to obtain a check value of the first transmission control header, and perform an exclusive OR operation on the check value of the first transmission control header and the check value of the first service layer to obtain the check value of the payload data.

In a feasible implementation, the memory 1102 is further configured to: write the payload data and the check value of the payload data into the memory; and after the storage device receives a data read request, read the payload data and the check value of the payload data from the memory, and check the payload data based on the check value of the payload data.

In a feasible implementation, the second transmission control header includes a first identifier, the storage device further includes a network interface card, and the network interface card is specifically configured to: after identifying the first identifier, perform cyclic redundancy check (CRC) on the payload data to obtain the check value of the payload data.

In a feasible implementation, the gateway device is a switch, a router, or a server.

In a feasible implementation, both the first transmission control header and the second transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload (IB payload) data.

Specifically, for a specific execution process in the foregoing embodiment, refer to the process in the foregoing corresponding method embodiment. Details are not described herein again.

In another scenario, the storage device may perform the following packet processing process.

The processor 1101 is configured to: obtain a third transmission control header and a check value of payload data, and obtain a check value of a third service layer through calculation based on the third transmission control header and the check value of the payload data, where the third service layer includes the third transmission control header and the payload data; and the third transmission control header is obtained based on a first transmission control header, the check value of the payload data is obtained through calculation based on the first transmission control header and a check value of a first service layer, the first transmission control header and the payload data are located in the first service layer in a first packet received by the storage server, and the first packet includes the first service layer and the check value of the first service layer. The communication interface 1103 is configured to forward a third packet to a user device or a gateway device, where the third packet includes the third service layer and the check value of the third service layer.

In a feasible implementation, when obtaining a check value of a third service layer through calculation based on the third transmission control header and the check value of the payload data, the processor 1101 is specifically configured to: perform cyclic redundancy check (CRC) on the third transmission control header to obtain a check value of the third transmission control header, and perform an exclusive OR operation on the check value of the third transmission control header and the check value of the payload data to obtain the check value of the third service layer.

In a feasible implementation, the check value of the payload data is obtained by the processor 1101 by performing an exclusive OR operation on a check value of the first transmission control header and the check value of the first service layer, and the check value of the first transmission control header is obtained by the processor by performing cyclic redundancy check (CRC) on the first transmission control header.

In a feasible implementation, the processor 1101 is further configured to: write the payload data and the check value of the payload data into the memory; and after the storage device receives a data read request, read the payload data and the check value of the payload data from the memory, and check the payload data based on the check value of the payload data.

In a feasible implementation, the gateway device is a switch, a router, or a server.

In a feasible implementation, the third transmission control header is generated based on session information to which the first transmission control header is linked, and both the first transmission control header and the third transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload IB payload data.

Specifically, for a specific execution process in the foregoing embodiment, refer to the process in the foregoing corresponding method embodiment. Details are not described herein again.

The memory 1102 may be any one of memories such as a random access memory (Random Access Memory, RAM), a read-only memory (Read-Only Memory, ROM), or a flash memory (Flash Memory). The RAM includes a static random access memory (Static RAM, SRAM), a dynamic random access memory (Dynamic RAM, DRAM), and the like. The ROM includes an erasable programmable ROM (Erasable Programmable ROM, EPROM), an electrically erasable programmable read-only memory (Electrically Erasable Programmable ROM, EEPROM), and the like. The processor 1101 may be a single-core or multi-core central processing unit (Central Processing Unit, CPU). This is not limited in this application.

It should be understood that, for specific running processes of the processor 1101 and the memory 1102 in the electronic device in this embodiment of this application, refer to corresponding processes in the foregoing method embodiments. Details are not described herein again.

FIG. 12 is a schematic diagram of a structure of a network device according to an embodiment of this application. The network device includes a processor 1201, a communication interface 1203, and a bus 1204.

The communication interface 1203 is configured to receive a second packet sent by a storage device, where the second packet includes a second service layer and a check value of payload data, and the second service layer includes a second transmission control header and the payload data. The communication interface 1203 is further configured to forward a fourth packet to a user device, where the fourth packet includes a fourth service layer and a check value of the fourth service layer, and the fourth service layer includes a fourth transmission control header and the payload data; and the fourth transmission control header is obtained based on the second transmission control header, and the check value of the fourth service layer is obtained by the processor 1201 through calculation based on the fourth transmission control header and the check value of the payload data.

In a feasible implementation, the fourth transmission control header is generated based on session information to which the second transmission control header is linked; and the check value of the fourth service layer is obtained by the processor 1201 by performing an exclusive OR operation on a check value of the fourth transmission control header and the check value of the payload data, and the check value of the fourth transmission control header is obtained by the processor 1201 by performing cyclic redundancy check (CRC) on the fourth transmission control header.

In a feasible implementation, the network device is a switch, a router, or a server.

In a feasible implementation, both the second transmission control header and the fourth transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload IB payload data.

Specifically, for a specific execution process in the foregoing embodiment, refer to the process in the foregoing corresponding method embodiment. Details are not described herein again.

In another scenario, the network device may perform the following packet check process.

The communication interface 1203 is configured to receive a third packet sent by a storage device, where the third packet includes a third service layer and a check value of the third service layer, and the third service layer includes a third transmission control header and payload data. The communication interface 1203 is further configured to send a fifth packet to a user device, where the fifth packet includes a fifth service layer and a check value of the fifth service layer, and the fifth service layer includes a fifth transmission control header and the payload data; and the fifth transmission control header is obtained based on the third transmission control header, the check value of the fifth service layer is obtained by the processor through calculation based on the fifth transmission control header and a check value of the payload data, and the check value of the payload data is obtained by the processor 1201 through calculation based on the third transmission control header and the check value of the third service layer.

In a feasible implementation, the check value of the payload data is obtained by performing an exclusive OR operation on a check value of the third transmission control header and the check value of the third service layer, and the check value of the third transmission control header is obtained by performing cyclic redundancy check (CRC) on the third transmission control header.

In a feasible implementation, the fifth transmission control header is generated based on session information to which the third transmission control header is linked; and the check value of the fifth service layer is obtained by performing an exclusive OR operation on a check value of the fifth transmission control header and the check value of the payload data, and the check value of the fifth transmission control header is obtained by performing cyclic redundancy check (CRC) on the fifth transmission control header.

In a feasible implementation, the network device is a switch, a router, or a server.

In a feasible implementation, both the third transmission control header and the fifth transmission control header include a network layer header and a transport layer header; and a network layer protocol includes at least one of an internet protocol version IPv4, an IPv6, an address resolution protocol (ARP), or a multiprotocol label switching (MPLS) protocol, a transport layer protocol includes at least one of a transmission control protocol (TCP), a user datagram protocol (UDP), a generic routing encapsulation (GRE) protocol, a datagram congestion control protocol (DCCP), an InfiniBand (IB) protocol, or a stream control transmission protocol (STCP), and the payload data is InfiniBand payload IB payload data.

Specifically, for a specific execution process in the foregoing embodiment, refer to the process in the foregoing corresponding method embodiment. Details are not described herein again.

An embodiment of this application provides a chip system. The chip system includes at least one processor, a memory, and an interface circuit. The memory, the interface circuit, and the at least one processor are interconnected through a line. The at least one memory stores instructions. When the instructions are executed by the processor, some or all of the steps recorded in any one of the foregoing method embodiments are implemented.

An embodiment of this application provides a computer storage medium. The computer storage medium stores a computer program. When the computer program is executed, some or all of the steps recorded in any one of the foregoing method embodiments are implemented.

An embodiment of this application provides a computer program. The computer program includes instructions. When the computer program is executed by a processor, some or all of the steps recorded in any one of the foregoing method embodiments are implemented.

In the foregoing embodiments, the description of each embodiment has respective focuses. For a part that is not described in detail in an embodiment, refer to related descriptions in other embodiments. It should be noted that, for brief description, the foregoing method embodiments are represented as a series of action combinations. However, persons skilled in the art should understand that this application is not limited to the described action sequence, because some steps may be performed in other sequences or simultaneously according to this application. It should be further appreciated by persons skilled in the art that embodiments described in this specification all belong to example embodiments, and the related actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A packet processing method, wherein the method comprises:
receiving, by a storage server, a first packet, wherein the first packet comprises a first service layer and a check value of the first service layer, and the first service layer comprises payload data;
obtaining, by the storage server, a check value of the payload data through calculation based on the first service layer and/or the check value of the first service layer; and
sending, by the storage server, a second packet to a gateway device, wherein the second packet comprises a second service layer, a check value of the second service layer, and the check value of the payload data; and
the second service layer is obtained based on the first service layer, and the check value of the second service layer is obtained through calculation based on the second service layer and the check value of the payload data.

2. The method according to claim 1, wherein
the first service layer further comprises a first transmission control header, and the second service layer comprises a second transmission control header and the payload data; and
the second transmission control header is generated based on session information to which the first transmission control header is linked.

3. The method according to claim 2, wherein the check value of the second service layer is obtained by performing an exclusive OR operation on a check value of the second transmission control header and the check value of the payload data, and the check value of the second transmission control header is obtained by performing cyclic redundancy check CRC on the second transmission control header.

4. The method according to claim 2 or 3, wherein the obtaining, by the storage server, a check value of the payload data through calculation based on the first service layer and/or the check value of the first service layer comprises:
performing, by a processor in the storage server, cyclic redundancy check CRC on the first transmission control header to obtain a check value of the first transmission control header, and performing an exclusive OR operation on the check value of the first transmission control header and the check value of the first service layer to obtain the check value of the payload data.

5. The method according to claim 4, wherein the method further comprises:
writing, by the storage server, the payload data and the check value of the payload data into a memory in the storage server; and
after the storage server receives a data read request, reading the payload data and the check value of the payload data from the memory, and checking the payload data based on the check value of the payload data.

6. The method according to claim 2 or 3, wherein the second transmission control header comprises a first identifier; and the obtaining, by the storage server, a check value of the payload data through calculation based on the first service layer and/or the check value of the first service layer comprises:
after identifying the first identifier, performing, by a network interface card in the storage server, cyclic redundancy check CRC on the payload data to obtain the check value of the payload data.

7. The method according to any one of claims 1 to 6, wherein the gateway device is a switch, a router, or a server.

8. The method according to any one of claims 1 to 7, wherein both the first transmission control header and the second transmission control header comprise a network layer header and a transport layer header; and
a network layer protocol comprises at least one of an internet protocol version IPv4, an IPv6, an address resolution protocol ARP, or a multiprotocol label switching MPLS protocol, a transport layer protocol comprises at least one of a transmission control protocol TCP, a user datagram protocol UDP, a generic routing encapsulation GRE protocol, a datagram congestion control protocol DCCP, an InfiniBand IB protocol, or a stream control transmission protocol STCP, and the payload data is InfiniBand payload IB payload data.

9. A packet processing method, wherein the method comprises:
obtaining, by a storage server, a third transmission control header and a check value of payload data, and obtaining a check value of a third service layer through calculation based on the third transmission control header and the check value of the payload data, wherein the third service layer comprises the third transmission control header and the payload data; and the third transmission control header is obtained based on a first transmission control header, the check value of the payload data is obtained through calculation based on the first transmission control header and a check value of a first service layer, the first transmission control header and the payload data are located in the first service layer in a first packet received by the storage server, and the first packet comprises the first service layer and the check value of the first service layer; and
sending, by the storage server, a third packet to a user device or a gateway device, wherein the third packet comprises the third service layer and the check value of the third service layer.

10. The method according to claim 9, wherein the obtaining a check value of a third service layer through calculation based on the third transmission control header and the check value of the payload data comprises:
performing, by a processor in the storage server, cyclic redundancy check CRC on the third transmission control header to obtain a check value of the third transmission control header, and performing an exclusive OR operation on the check value of the third transmission control header and the check value of the payload data to obtain the check value of the third service layer.

11. The method according to claim 9 or 10, wherein
the check value of the payload data is obtained by the processor in the storage server by performing an exclusive OR operation on a check value of the first transmission control header and the check value of the first service layer; and
the check value of the first transmission control header is obtained by the processor by performing cyclic redundancy check CRC on the first transmission control header.

12. The method according to claim 11, wherein the method further comprises:
writing, by the storage server, the payload data and the check value of the payload data into a memory in the storage server; and
after the storage server receives a data read request, reading the payload data and the check value of the payload data from the memory, and checking the payload data based on the check value of the payload data.

13. The method according to any one of claims 9 to 12, wherein the gateway device is a switch, a router, or a server.

14. The method according to any one of claims 9 to 13, wherein the third transmission control header is generated based on session information to which the first transmission control header is linked, and both the first transmission control header and the third transmission control header comprise a network layer header and a transport layer header; and
a network layer protocol comprises any one of an internet protocol version IPv4, an IPv6, an address resolution protocol ARP, or a multiprotocol label switching MPLS protocol, a transport layer protocol comprises at least one of a transmission control protocol TCP, a user datagram protocol UDP, a generic routing encapsulation GRE protocol, a datagram congestion control protocol DCCP, an InfiniBand IB protocol, or a stream control transmission protocol STCP, and the payload data is InfiniBand payload IB payload data.

15. A packet check method, wherein the method comprises:
receiving, by a gateway device, a second packet sent by a storage server, wherein the second packet comprises a second service layer and a check value of payload data, and the second service layer comprises a second transmission control header and the payload data; and
sending, by the gateway device, a fourth packet to a user device, wherein the fourth packet comprises a fourth service layer and a check value of the fourth service layer, and the fourth service layer comprises a fourth transmission control header and the payload data; and
the fourth transmission control header is obtained based on the second transmission control header, and the check value of the fourth service layer is obtained through calculation based on the fourth transmission control header and the check value of the payload data.

16. The method according to claim 15, wherein
the fourth transmission control header is generated based on session information to which the second transmission control header is linked; and
the check value of the fourth service layer is obtained by performing an exclusive OR operation on a check value of the fourth transmission control header and the check value of the payload data, and the check value of the fourth transmission control header is obtained by performing cyclic redundancy check CRC on the fourth transmission control header.

17. The method according to claim 15 or 16, wherein the gateway device is a switch, a router, or a server.

18. The method according to any one of claims 15 to 17, wherein both the second transmission control header and the fourth transmission control header comprise a network layer header and a transport layer header; and
a network layer protocol comprises at least one of an internet protocol version IPv4, an IPv6, an address resolution protocol ARP, or a multiprotocol label switching MPLS protocol, a transport layer protocol comprises at least one of a transmission control protocol TCP, a user datagram protocol UDP, a generic routing encapsulation GRE protocol, a datagram congestion control protocol DCCP, an InfiniBand IB protocol, or a stream control transmission protocol STCP, and the payload data is InfiniBand payload IB payload data.

19. A packet check method, wherein the method comprises:
receiving, by a gateway device, a third packet sent by a storage server, wherein the third packet comprises a third service layer and a check value of the third service layer, and the third service layer comprises a third transmission control header and payload data; and
sending, by the gateway device, a fifth packet to a user device, wherein the fifth packet comprises a fifth service layer and a check value of the fifth service layer, and the fifth service layer comprises a fifth transmission control header and the payload data; and
the fifth transmission control header is obtained based on the third transmission control header, the check value of the fifth service layer is obtained through calculation based on the fifth transmission control header and a check value of the payload data, and the check value of the payload data is obtained through calculation based on the third transmission control header and the check value of the third service layer.

20. The method according to claim 19, wherein
the check value of the payload data is obtained by performing an exclusive OR operation on a check value of the third transmission control header and the check value of the third service layer, and the check value of the third transmission control header is obtained by performing cyclic redundancy check CRC on the third transmission control header.

21. The method according to claim 19 or 20, wherein
the fifth transmission control header is generated based on session information to which the third transmission control header is linked; and
the check value of the fifth service layer is obtained by performing an exclusive OR operation on a check value of the fifth transmission control header and the check value of the payload data, and the check value of the fifth transmission control header is obtained by performing cyclic redundancy check CRC on the fifth transmission control header.

22. The method according to any one of claims 19 to 21, wherein the gateway device is a switch, a router, or a server.

23. The method according to any one of claims 19 to 22, wherein both the third transmission control header and the fifth transmission control header comprise a network layer header and a transport layer header; and
a network layer protocol comprises at least one of an internet protocol version IPv4, an IPv6, an address resolution protocol ARP, or a multiprotocol label switching MPLS protocol, a transport layer protocol comprises at least one of a transmission control protocol TCP, a user datagram protocol UDP, a generic routing encapsulation GRE protocol, a datagram congestion control protocol DCCP, an InfiniBand IB protocol, or a stream control transmission protocol STCP, and the payload data is InfiniBand payload IB payload data.

24. A storage device, wherein the device comprises a processor, a memory, and a communication interface;
the communication interface is configured to receive a first packet, wherein the first packet comprises a first service layer and a check value of the first service layer, and the first service layer comprises payload data;
the processor is configured to obtain a check value of the payload data through calculation based on the first service layer and/or the check value of the first service layer;
the communication interface is further configured to forward a second packet to a gateway device, wherein the second packet comprises a second service layer, a check value of the second service layer, and the check value of the payload data; and
the second service layer is obtained based on the first service layer, and the check value of the second service layer is obtained through calculation based on the second service layer and the check value of the payload data.

25. The storage device according to claim 24, wherein the first service layer further comprises a first transmission control header, the second service layer comprises a second transmission control header and the payload data, and the second transmission control header is generated based on session information to which the first transmission control header is linked.

26. The storage device according to claim 25, wherein the check value of the second service layer is obtained by performing an exclusive OR operation on a check value of the second transmission control header and the check value of the payload data, and the check value of the second transmission control header is obtained by performing cyclic redundancy check CRC on the second transmission control header.

27. The storage device according to claim 24 or 25, wherein the processor is specifically configured to:
perform cyclic redundancy check CRC on the first transmission control header to obtain a check value of the first transmission control header, and perform an exclusive OR operation on the check value of the first transmission control header and the check value of the first service layer to obtain the check value of the payload data.

28. The storage device according to claim 27, wherein the memory is further configured to:
write the payload data and the check value of the payload data into the memory; and
after the storage device receives a data read request, read the payload data and the check value of the payload data from the memory, and check the payload data based on the check value of the payload data.

29. The storage device according to claim 24 or 25, wherein the second transmission control header comprises a first identifier, the storage device further comprises a network interface card, and the network interface card is specifically configured to:
after identifying the first identifier, perform cyclic redundancy check CRC on the payload data to obtain the check value of the payload data.

30. The storage device according to any one of claims 24 to 29, wherein the gateway device is a switch, a router, or a server.

31. The storage device according to any one of claims 24 to 30, wherein both the first transmission control header and the second transmission control header comprise a network layer header and a transport layer header; and
a network layer protocol comprises at least one of an internet protocol version IPv4, an IPv6, an address resolution protocol ARP, or a multiprotocol label switching MPLS protocol, a transport layer protocol comprises at least one of a transmission control protocol TCP, a user datagram protocol UDP, a generic routing encapsulation GRE protocol, a datagram congestion control protocol DCCP, an InfiniBand IB protocol, or a stream control transmission protocol STCP, and the payload data is InfiniBand payload IB payload data.

32. A storage device, wherein the device comprises a processor and a communication interface;
the processor is configured to: obtain a third transmission control header and a check value of payload data, and obtain a check value of a third service layer through calculation based on the third transmission control header and the check value of the payload data, wherein the third service layer comprises the third transmission control header and the payload data; and the third transmission control header is obtained based on a first transmission control header, the check value of the payload data is obtained through calculation based on the first transmission control header and a check value of a first service layer, the first transmission control header and the payload data are located in the first service layer in a first packet received by the storage server, and the first packet comprises the first service layer and the check value of the first service layer; and
the communication interface is configured to forward a third packet to a user device or a gateway device, wherein the third packet comprises the third service layer and the check value of the third service layer.

33. The storage device according to claim 32, wherein when obtaining a check value of a third service layer through calculation based on the third transmission control header and the check value of the payload data, the processor is specifically configured to:
perform cyclic redundancy check CRC on the third transmission control header to obtain a check value of the third transmission control header, and perform an exclusive OR operation on the check value of the third transmission control header and the check value of the payload data to obtain the check value of the third service layer.

34. The storage device according to claim 32 or 33, wherein the check value of the payload data is obtained by the processor in the storage server by performing an exclusive OR operation on a check value of the first transmission control header and the check value of the first service layer, and the check value of the first transmission control header is obtained by the processor by performing cyclic redundancy check CRC on the first transmission control header.

35. The storage device according to claim 34, wherein the processor is further configured to:
write the payload data and the check value of the payload data into a memory; and
after the storage device receives a data read request, read the payload data and the check value of the payload data from the memory, and check the payload data based on the check value of the payload data.

36. The storage device according to any one of claims 32 to 35, wherein the gateway device is a switch, a router, or a server.

37. The storage device according to any one of claims 32 to 36, wherein the third transmission control header is generated based on session information to which the first transmission control header is linked, and both the first transmission control header and the third transmission control header comprise a network layer header and a transport layer header; and
a network layer protocol comprises at least one of an internet protocol version IPv4, an IPv6, an address resolution protocol ARP, or a multiprotocol label switching MPLS protocol, a transport layer protocol comprises at least one of a transmission control protocol TCP, a user datagram protocol UDP, a generic routing encapsulation GRE protocol, a datagram congestion control protocol DCCP, an InfiniBand IB protocol, or a stream control transmission protocol STCP, and the payload data is InfiniBand payload IB payload data.

38. A network device, wherein the network device comprises a processor and a communication interface;
the communication interface is configured to receive a second packet sent by a storage device, wherein the second packet comprises a second service layer and a check value of payload data, and the second service layer comprises a second transmission control header and the payload data;
the communication interface is further configured to forward a fourth packet to a user device, wherein the fourth packet comprises a fourth service layer and a check value of the fourth service layer, and the fourth service layer comprises a fourth transmission control header and the payload data; and
the fourth transmission control header is obtained based on the second transmission control header, and the check value of the fourth service layer is obtained by the processor through calculation based on the fourth transmission control header and the check value of the payload data.

39. The network device according to claim 38, wherein
the fourth transmission control header is generated based on session information to which the second transmission control header is linked; and
the check value of the fourth service layer is obtained by the processor by performing an exclusive OR operation on a check value of the fourth transmission control header and the check value of the payload data, and the check value of the fourth transmission control header is obtained by the processor by performing cyclic redundancy check CRC on the fourth transmission control header.

40. The network device according to claim 38 or 39, wherein the network device is a switch, a router, or a server.

41. The network device according to any one of claims 38 to 40, wherein both the second transmission control header and the fourth transmission control header comprise a network layer header and a transport layer header; and
a network layer protocol comprises at least one of an internet protocol version IPv4, an IPv6, an address resolution protocol ARP, or a multiprotocol label switching MPLS protocol, a transport layer protocol comprises at least one of a transmission control protocol TCP, a user datagram protocol UDP, a generic routing encapsulation GRE protocol, a datagram congestion control protocol DCCP, an InfiniBand IB protocol, or a stream control transmission protocol STCP, and the payload data is InfiniBand payload IB payload data.

42. A network device, wherein the network device comprises a processor and a communication interface;
the communication interface is configured to receive a third packet sent by a storage server, wherein the third packet comprises a third service layer and a check value of the third service layer, and the third service layer comprises a third transmission control header and payload data;
the communication interface is further configured to send a fifth packet to a user device, wherein the fifth packet comprises a fifth service layer and a check value of the fifth service layer, and the fifth service layer comprises a fifth transmission control header and the payload data; and
the fifth transmission control header is obtained based on the third transmission control header, the check value of the fifth service layer is obtained by the processor through calculation based on the fifth transmission control header and a check value of the payload data, and the check value of the payload data is obtained by the processor through calculation based on the third transmission control header and the check value of the third service layer.

43. The network device according to claim 42, wherein the check value of the payload data is obtained by performing an exclusive OR operation on a check value of the third transmission control header and the check value of the third service layer, and the check value of the third transmission control header is obtained by performing cyclic redundancy check CRC on the third transmission control header.

44. The network device according to claim 42 or 43, wherein the fifth transmission control header is generated based on session information to which the third transmission control header is linked, the check value of the fifth service layer is obtained by performing an exclusive OR operation on a check value of the fifth transmission control header and the check value of the payload data, and the check value of the fifth transmission control header is obtained by performing cyclic redundancy check CRC on the fifth transmission control header.

45. The network device according to any one of claims 42 to 44, wherein the network device is a switch, a router, or a server.

46. The network device according to any one of claims 42 to 45, wherein both the third transmission control header and the fifth transmission control header comprise a network layer header and a transport layer header; and
a network layer protocol comprises at least one of an internet protocol version IPv4, an IPv6, an address resolution protocol ARP, or a multiprotocol label switching MPLS protocol, a transport layer protocol comprises at least one of a transmission control protocol TCP, a user datagram protocol UDP, a generic routing encapsulation GRE protocol, a datagram congestion control protocol DCCP, an InfiniBand IB protocol, or a stream control transmission protocol STCP, and the payload data is InfiniBand payload IB payload data.

47. A chip system, wherein the chip system comprises at least one processor, a memory, and an interface circuit; the memory, the interface circuit, and the at least one processor are interconnected through a line; the at least one memory stores instructions; and when the instructions are executed by the processor, the method according to any one of claims 1 to 23 is implemented.

48. A computer-readable storage medium, wherein the computer-readable storage medium stores a computer program, and when the computer program is executed, the method according to any one of claims 1 to 23 is implemented.

49. A computer program, wherein the computer program comprises instructions, and when the computer program is executed, the method according to any one of claims 1 to 23 is implemented.
